# EUROPEAN PATENT APPLICATION

(11) **EP 1 758 000 A1**
(43) Date of publication of application: **28.02.2007**
(21) Application number: 05107788.1
(22) Date of filing: 25.08.2005
(51) Int. Cl.: G05B 19/042, G05B 19/10, H05B 6/68, F24C 7/08

(54) **Electronic oven control including cooking recipes**

(71) Applicant: WHIRLPOOL CORPORATION, Benton Harbor Michigan 49022 (US)
(72) Inventor: Braggion, Davide, 21025, Comerio (IT); Annoscia, Anna, 21025, Comerio (IT)
(74) Representative: Guerci, Alessandro

(57) **Abstract**

The invention relates to a cooking oven control, which includes a set of memorized automatic cooking recipes configurable according to the user preferences, and to a method for memorizing and activating the preferences thereof.

## Description

The present invention relates to a cooking oven control, which includes a set of memorized automatic cooking recipes configurable according to the user preferences, and to a method for memorizing and activating the preferences thereof.

In the past there was no need to customize the behavior of the appliances because with the available technology it was possible implementing only the few basic functions on their electronic controls.

The further availability of new electronic powerful technologies at lower cost allowed increasing the number of features of the products, driving the development towards the customization of the appliance control.

Said customization is made according to the personal usage of appliance and according to the habits of the countries where the appliance is sold. However, despite a more affordable price of the electronic components there's still the need to keep the cost of the overall product into a competitive range to maintain an economic advantage on the marketplace.

It is well known in the industry that one of the possible solutions to achieve this target is to optimize the use of the component according to flexibility criteria within the manufacturing process. This can be obtained by integrating into the same component the maximum number of features and then extending as much as possible the use of the component to the family of products to be produced. In fact, configuring the component according to the model that is scheduled for the production by activating only the proper subset of features available within the component, it is possible to extend the usage of the component to the whole production, achieving the economic benefits of a large scale production. As a consequence of this possible optimization, today is common to find appliances having multiple country destinations provided with the same electronic control.

The recent controls of this family are often provided of graphic user interfaces on which the features are represented by means of graphics and text, either with simple word or sentences, either using scrolling or permanently fixed text. In fact, this way to represent the information is preferred to the traditional icon set of function indicators, because it is more exhaustive and explanatory. Moreover it introduces the possibility to show additional information, like guidance during the appliance operation (i.e. displaying " introduce food"), or like supporting the user in setting up of the appliance (i.e. displaying "set the duration of cooking") providing therefore support for the execution of the automatic recipes. The latest generation of these graphic electronic controls includes also the possibility to select the language/country of the user interface within a set of available languages/countries, according to the user preferences or according the language that is spoken in the country/region where the appliance is sold. This feature has been introduced by the implementation of an internal dictionary database.

Despite the versatility reached with such electronic controls, today the set of implemented features/functions, and particularly the automatic cooking recipe programs, are independent from the language/country set, whenever of course those are represented in different languages. The reason of this is to maintain the consistency in the behavior of the electronic control among the settable languages, keeping the behavior constant and separate from the information presented. From a technical standpoint the dictionary database can be implemented in a portion of the memory containing the set of text strings translated in the different languages, at which a pointer makes reference consistently with the language set by the user. In this way the development of the software and their modification is simplified and the flexibility in the manufacturing process is guaranteed. In fact this optimized electronic control is "adaptable", i.e. can be mounted on such appliances having a multiple country/region destination by simply changing of the set language. Today there are appliances equipped with up to 20 different languages.

As example of this known implementation, following tables 1a and 1b describe a logical organization of the automated recipe functions into the oven control memory to be applied in a user interface in which all the automatic recipes are actionable for each settable language.

**Tab. 1a**

| | | | | | | |
|---|---|---|---|---|---|---|
| **Selectable Preference** | **Language** | **Recipe 1** | **Recipe 2** | **Recipe 3** | **............ ....** | **Recipe 40** |
| **Preference 1** | **ENGLISH** | **Crunchy Pizza** | **Roast Beef** | **Grilled Vegetables** | **............ ....** | **Apple Pie** |
| **Preference 2** | **FRANCAIS** | **Pizza Croustillant** | **Rôtis de Boeuf** | **Légumes grillées** | **............ ....** | **Gâteau de Pommes** |
| **Preference 3** | **DEUTSCH** | **Knusprige Pizza** | **Rostbraten** | **Gemuese-gratin** | **............ ....** | **Apfelkuchen** |
| **Preference 4** | **ITALIANO** | **Pizza Croccante** | **Rosbif** | **Verdure Grigliate** | **............ .....** | **Torta di mele** |
| **.....** | **.....** | **.....** | **.....** | **.....** | **............ .....** | **.....** |
| **Preference 20** | **Arab** | **.....** | **.....** | **.....** | **............ .....** | **.....** |

Table 1a shows the list of the preferences within the text database associated to the language name as selectable parameter.

**Tab. 1b**

| | **Cook Function** | **Temperature/Power Level set** | **Cooking Duration** |
|---|---|---|---|
| **Recipe 1** | **Forced Air** | **T=250 °C** | **8 min.** |
| **Recipe 2** | **Static** | **T=180 °C** | **18 min.** |
| **Recipe 3** | **Grill** | **Max level** | **25 min.** |
| **.....** | **.....** | **.....** | **.....** |
| **Recipe 40** | **Forced Air** | **T= 200 °C** | **30 min.** |

Table 1 b shows the executable control parameters associated to the recipes required for the execution of the same recipes by the oven control. These parameters establishes the behavior of the oven control while running the selectable cooking recipe and are independent from the language set.

By choosing in table 1 a, i.e. the English Language, the following recipes are selectable from the user on the user interface where the names of the recipes and the other information are displayed in the English language: Crunchy Pizza, Roast Beef, Grilled Vegetables, and Apple Pie. The same recipe set will be also available when setting the i.e. Arab selection, whether the translation of the displayed text will be done in the Arab language. When the user has selected and confirmed the recipe, the control takes from the memory, automatically, the control parameters (as represented in table 1 b) and executes the recipe program with the correspondent parameters. For example, to execute the Apple Pie recipe the oven will activate the "Forced Air" mode with a Temperature setting of 200°C, for a duration of 30 min.

It clearly appears that the only functional customization possible is to select the desired translation for the available functions.

It is also important to comment here that the translation of recipe names can be difficult because sometimes the recipes can be unknown in a certain region/language, therefore becoming an uneuseful feature for the product in those regions. The problem appears more evident when trying to increase the number of recipes/functions within the oven control when trying to enlarge the offers to several market regions. So far this problem has been minimized by including in the recipe set only some "international" recognized recipes, in order to provide a common set of recipes that any user belonging to the market region can set, but it has not been solved.

A problem arises when the designer wants to customize the oven controls maintaining the entire set of settable languages, providing only a specific subset of cooking recipes for each specific setting of the language/country parameter, characterized by the region thereof.

The solution would introduce a functional customization of the electronic control, in a consistent way for the sale region for which the appliance is designed. The problem is mainly due to the cultural environment for which it has no sense to extend the same feature to different regions.

As an example, for a better understanding of the issue, the "Quiche Lorraine", which is a typical French recipe, is mostly an unknown recipe in the Russian region, while the Pizza preparation is currently known in many countries. For this reason it is unuseful to include the French recipe "Quiche Lorraine" in the Russian cooking recipes set, contrary to what is made for the Pizza recipe. The choice to include anyway an unuseful set of recipes, including the "Quiche Lorraine", will force the Russian user to make additional and boring operation during the selection process of the recipes.

In addition, the choice of having the availability of all the features for all the languages introduces the possibility of a cultural inconsistency. For example, this inconsistency may happen when recipes with pork are included and associated with the Arab language, together with the Israeli one, just because the two nations are part of the same market region. We know in fact that this solution is not acceptable from religious and cultural standpoint and that this choice would depreciate the market value of the appliance.

Finally, it is necessary to consider the expensive and unuseful translation required to implement this solution, whenever is requested to memorize in the oven control a significative number of recipes for each of the country/language selectable. On top of this, this type of implementation needs large memory size component, which drives to an additional cost.

For the above reasons it is clear that providing the complete set of function for each selection of language/country within the electronic control doesn't allow a real customization of the product for the specific language/country selectable within the set of languages/countries selectable on the same control.

More specifically, providing the entire set of recipes for each settable language doesn't provide a real oven customization.

An object of this invention is an electronic control for appliances which does not present the above mentioned problems.

Anther object of this invention is to provide a method to memorize and activate the preferences thereof, in order to allow the users to reconfigure a set or a subset of the appliance functions, according the preferences selected.

According to the present invention, an electronic oven family equipped with an electronic control according the appended claims has a reduced cost and further improves the versatility of its use.

For a better understanding of the invention, and to show how embodiments of the same may be carried into effect, reference will now be made by way of an example, to the accompanying diagrammatic drawings in which:

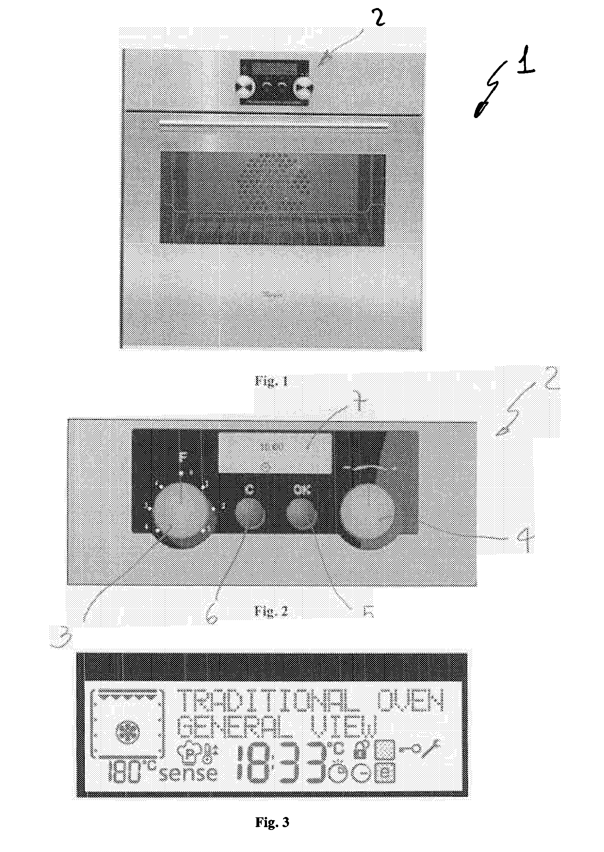

figure 1 is front view of an electric oven equipped with an electronic user interface according to the invention,
figure 2 is a detail of the oven of figure 1, showing the electronic user interface,
figure 3 is an example of a graphic and text display used in the user interface of figure 2, and
figure 4 shows in a schematic way the electronic architecture of a user interface for the electronic oven of figure 1.

With reference to the drawings, an electric oven 1 for domestic cooking use, is provided of an electronic user interface (UI) 2 for a proper functional setting, in order to cook the food according the need of the user and according to the requirements of the food itself.

The UI 2 of this oven includes a function selector 3 to select the working mode of the oven among the available functionality, a rotary switch selector 4 to set the working parameters for the selected function, a selection key 5 to confirm the selection chosen, a cancel key 6 to step back in the previous selection, a buzzer (not shown) to provide some audio feedback, and a graphic and icon display 7 to visualize the entire setup process and to provide some visual feedback when a function is running.

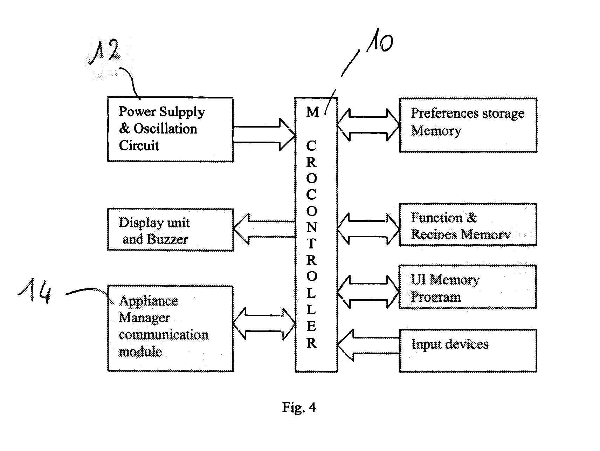

As detailed in Fig. 4 the user interface architecture includes at least a microcontroller 10 connected to a power supply module and oscillation circuit 12 for its synchronism. The microcontroller 10 is also connected to input devices to receive the inputs from the user, which are: the function selector 3, the rotary switch selector 4, the selection key 5 and the cancel key 6. Three memories are at least connected with the microcontroller: a user interface program memory which contains the program for the management of the entire user interface, a function and recipes memory in which are memorized the entire set of functions and the recipes executable by the oven, and a memory where the microcontroller stores the parameters and the preferences set by the user. The microcontroller 10 supervises also the visualization on the graphic display at which it is connected, and sends commands to the buzzer when requested to provide an audio feedback.

The user interface module is then connected to the appliance manager (not shown) through a communication module 14, which is connected and supervised by the user interface microcontroller 10. The appliance manager is the portion of the oven electronic control executing the management of the heaters, sensors and of all the devices that can be activated in the oven like motors, lamps or door locks normally defined as the active elements of the oven. For this purpose the appliance manager includes at least another microcontroller (not shown) unit which is the "brain" of the appliance manager module to execute the programs, driving the active elements according to the preset parameter or according to the parameter set by the user by means of the user interface. In fact, the user interface is connected to the appliance manager with a bi-directional connection, transmitting the commands inputted by the user and receiving from the appliance manager the information related to the working status of the oven that need to be displayed on the graphic display 7.

To implement the customization of the user interface 21 according to the traditions and uses of the market region where the product is sold, the function and recipe memory must be organized in the way to activate only a subset of the available recipes among the whole set of available recipes.

In following tables 2a and 2b it is described an example of the logical organization of said memory, where the availability of a sub set of regional recipes is linked to the activation of a specific preference parameter as i.e the language spoken in that market region.

**Tab. 2a**

| | | | | | | |
|---|---|---|---|---|---|---|
| **Selectable Preference** | **Language** | **Recipe1** | **Recipe2** | **Recipe3** | **......... .......** | **Recipe10** |
| **Preference 1** | **ENGLISH** | **Soft Bread** | **Roast Beef** | **Grilled Vegetables** | **......... .......** | **Cheese cake** |
| **Preference 2** | **FRENCH** | **Quiche Lorraine** | **Cuissot d'Agneau** | **Légumes en daube** | **......... .......** | **Meringues** |
| **Preference 3** | **GERMAN** | **Lasagna** | **Schweinebraten** | **Braten-kartoffeln** | **......... .......** | **Schwarzwaelder Kirschtorte** |
| **Preference 4** | **ITALIAN** | **Pizza** | **Arrosto di Vitello** | **Peperoni al Forno** | **......... .......** | **Torta a Ciambella** |
| **.....** | **.....** | **.....** | **.....** | **.....** | **.....** | **.....** |
| **Preference 20** | **ARAB** | **.....** | **.....** | **.....** | **..... .....** | **.....** |

Table 2a shows the list of preferences that can be selected in the user interface of the oven control:

Preference1 is associated to the English language. By selecting this language the following recipes will became enabled to be selected by the user: Recipe 1= Soft Bread, Recipe 2= Roast Beef, recipe 3 = Grilled Vegetables.....Recipe 10= Cheese cake.

Preference2 is associated to the French language. By selecting this language the following recipes will became enabled to be selected by the user: Recipe 1= Quiche Lorraine, Recipe 2= Cuissot d'Agneau, Recipe 3 = Légumes en daube, .....Recipe 10= Meringues. And so on.

Of course if one language is spoken in many countries around the world where the oven is sold, the language itself, rather than the country name may not be the right parameter name to identify the proper set of recipes.

It could then be used the country name. It would be also possible to associate a specific subset of recipes to a parameter like the meal type (i.e the vegetarian, Mediterranean) or the ethnic cooking (Asian, French, Italian).

**Tab. 2b**

| **ENGLISH** | **Cook Function** | **Temperature/Power Level set** | **Cooking Duration** |
|---|---|---|---|
| **Recipe 1** | **Static** | **T= 210 °C** | **45 min.** |
| **Recipe 2** | **Static** | **T= 200°C** | **30 min.** |
| **Recipe 3** | **Grill** | **Max Level** | **20 min.** |
| **.....** | **.....** | **.....** | **.....** |
| **Recipe 10** | **Pastry** | **T=180 °C** | **40 min.** |
| | | | |
| **FRENCH** | **Cook Function** | **Temperature/Power Level set** | **Cooking Duration** |
| **Recipe 1** | **Forced Air** | **T=175 °C** | **20 min.** |
| **Recipe 2** | **Static** | **T=190 °C** | **40 min.** |
| **Recipe 3** | **Forced Air + Bottom** | **T=160 °C** | **50 min.** |
| **.....** | **.....** | **.....** | **.....** |
| **Recipe 10** | **Pastry** | **T=80 °C** | **180 min** |
| | | | |
| **GERMAN** | **Cook Function** | **Temperature/Power Level set** | **Cooking Duration** |
| **Recipe 1** | **Forced Air** | **T=180 °C** | **40 min.** |
| **Recipe 2** | **Forced Air + Bottom** | **T=160 °C** | **60 min.** |
| **Recipe 3** | **Static+ Grill** | **T=200 + Mid Level** | **40 + 10 min** |
| **.....** | **.....** | **.....** | **.....** |
| **Recipe 10** | **Static** | **T=180 °C** | **50 min.** |
| | | | |
| **ITALIAN** | **Cook Function** | **Temperature/Power Level set** | **Cooking Duration** |
| **Recipe 1** | **Forced Air** | **T= 250 °C** | **8 min.** |
| **Recipe 2** | **Static** | **T= 200 °C** | **45 min.** |
| **Recipe 3** | **Forced Air + Bottom** | **T=160 °C** | **50 min.** |
| **.....** | **.....** | **.....** | **.....** |
| **Recipe 10** | **Pastry** | **T= 200 °C** | **40 min.** |
| | | | |
| **ARAB** | **Cook Function** | **Temperature/Power Level set** | **Cooking Duration** |
| **Recipe 1** | **Turbo Grill** | **Mid Level** | **40 min** |
| **Recipe 2** | **Static** | **T= 210 °C** | **60 min** |
| **Recipe 3** | **Forced Air** | **T=180 °C** | **45 min** |
| **.....** | **.....** | **.....** | **.....** |
| **Recipe 10** | **Pastry** | **T= 200 °C** | **45 min** |

Table 2b links the control parameters to the singles recipes. These parameters will be transmitted to the appliance manager, trough the communication module, to execute the recipe programs, according the procedure already described in connection for the prior art. For example the Roast Beef recipe, which is the second recipe of the Preference set number 1 associated to the English language parameter, has to be executed by activating the Static function, (which is one of the modality available for the Appliance Manager) at 200°C for a duration of 30 minutes.

According to table 2b if the user sets with the input devices of the UI for example the Preference1 which is associated to the English language, automatically the oven user interface enables the selection of the following recipes, activating their use: Recipe1 = Soft Bread, Recipe 2 = Roast Beef, Recipe 3 = Grilled Vegetables...Recipe 10 = Cheese cake. All the remaining recipes associated to the others preference parameters will not be displayed on the graphic display, and the user will not be able to activate them. By changing the preference parameter, i.e. changing from Preference 1 (English) to preference 4 (Italian), a different subset of recipes became available on the user interface and the control enables their use: Recipe1 = Pizza, Recipe 2 = Arrosto di Vitello, Recipe 3 = Peperoni al Forno ..... Recipe 10 = Torta a Ciambella. According to this new selection, a new set of control parameters, as shown in Table 2b, is linked to the active set of recipes in order to send the right control parameters to the appliance manager to execute the new set of cooking recipes. The new set of control parameters cannot be the same of the former preference set.

According to the present invention, it could be however possible to have another set or functions, in particular recipes (i.e an international set of recipes), that is common to any possible selection of the preference parameter. These functions, in particular recipes, become a common set of function or recipes.

According to the present invention it is anymore necessary to create a unique long exhaustive list of recipes covering all the typical uses of the entire market region avoiding the problem of the contextual translation of the names in each of the available languages. As a consequence of this invention there is also an advantage in the optimization of the memory use. In fact, if compared to the exhaustive implementation as found in the prior art, with the same amount of memory it is now possible to store an higher number of recipes to satisfy a larger set of regions, saving also the resources in uneuseful translations. Another advantage of this solution is that the user has available only useful and customized recipes.

A method has been here identified for the customization of the user interface of a domestic appliance.

According this method, the user can activate a specific subset of automatic recipes (active recipe set) among all the recipes available in the memory (available recipes set) enabling the user interface to display only said subset. The activation of the subset of recipes is linked with the selection and setting, according to the user preferences, of at least one setting parameter (one or more). In the memory it is available at least another subset of automatic recipes, associated to another value of the setting parameter.

Each subset of automatic recipes can have a logical connection, for cultural reason o for the optimized use of the control, to a specific category of the settable parameters.

## Claims

**1.** Electronic oven control, of the type including a memory device in which data are stored, a processing unit to process said data, a set of recipes stored in said memory device and selectable by the user, means (3,4,5,6) for setting the oven according to user preferences **characterized in that** it comprises means for automatically activating only a subset of functions according to the preferences set by the user.

**2.** An electronic oven control as claimed in claim 1, **characterized in that** the subset of selectable functions is a set of automatic cooking recipes programs.

**3.** An electronic oven control as claimed in claim 1, **characterized in that** the preferences are the languages or regions.

**4.** An electronic oven control as claimed in claim 1, **characterized in that** the setting parameters to adapt the oven characteristics to the region where the oven is installed, are the geographic names of said regions.

**4.** An electronic oven control as claimed in claim 1, **characterized in that** the setting parameters to adapt the oven to the region are the names of the typical way of cooking of said region.

**5.** An electronic oven control as claimed in claim 1, **characterized in that** the subset of recipes enabled to be displayed and to be activated for each regional setting is different for each settable region.

**6.** An electronic oven control as claimed in claim 1, **characterized in that** the subset of recipes enabled to be displayed and to be activated for each regional setting is partially the same for each settable region.

**7.** Method for controlling an oven having an electronic processing unit in which the user can set the preferences and choose within a list of recipes, **characterized in that** the processing unit enables certain set of recipes only of the above list according to a specific set preference.

**8.** Method according to claim 3, **characterized in that** said set of preference is the language or region.
